# EUROPEAN PATENT SPECIFICATION

(11) **EP 2 727 460 B1**
(45) Date of publication and mention of the grant of the patent: **12.08.2015**
(21) Application number: 13187293.9
(22) Date of filing: 04.10.2013
(51) Int. Cl.: A01J 7/04

(54) **Dairy animal treatment device**
Milchtierbehandlungsvorrichtung
Dispositif de traitement d'un animal laitier

(30) Priority: 05.11.2012 NL 2009758
(43) Date of publication of application: 07.05.2014
(73) Proprietor: Lely Patent N.V., 3147 PA Maassluis (NL)
(72) Inventor: De Groot, Pieter Gerlof, 3147 PA Maassluis (NL)
(74) Representative: Jennen, Peter Leonardus Hendricus

(56) References cited:
- WO-A1-99/01024
- WO-A1-2005/093387
- WO-A1-2009/104953
- DE-A1- 19 630 146
- US-B1- 6 267 077

## Description

The present invention relates to a dairy animal treatment assembly, comprising a dairy animal standing area, a teat treatment device configured to apply a liquid to a teat of a dairy animal at the dairy animal standing area, a control device to control the teat treatment device, wherein the teat treatment device comprises at least one liquid line with an opening for applying the liquid to the teat, and also a sensor system with a through-flow cell with a liquid delivery opening and a liquid removal opening, said through-flow cell being configured to allow the through-flow of a liquid, a detector device which is configured to measure a characteristic of the liquid in the cell and to generate an associated detector signal, and a sensor control which is configured to analyse the detector signal, wherein the sensor control is configured to detect a liquid changeover in the through-flow cell if a change per time unit in the detector signal and/or a change in the detector signal is greater than a predefined change threshold value or than a predefined threshold value, respectively.

A dairy animal treatment assembly of this type is described in the non-pre-published patent application NL2007149. This assembly appears in practice not only to require direct action in the event of a detected liquid changeover, but furthermore appears often to detect false positive liquid changeovers. Another treatment assembly is known from WO 9901024 A1.

The object of the present invention is to reduce at least one of the aforementioned disadvantages.

The invention achieves this object with an assembly of the aforementioned type, wherein the dairy animal treatment assembly furthermore comprises a storage container for the liquid and a buffer device, wherein the buffer device is directly connected to the liquid line, and wherein the storage container and the buffer device are directly interconnected by means of a buffer delivery line, wherein the buffer delivery line comprises the through-flow cell. It is thus guaranteed that, if a liquid changeover is detected, there is at least some time to perform corrective measures. At any rate, the buffer device then still contains liquid which sufficed, or at least previously generated no liquid changeover. This increases the safety for the dairy animals, and the convenience for the operating person such as the farmer. In the assembly in the cited application, the possibility in fact exists that a liquid changeover is detected, on the basis of which action can be undertaken, but that, following this changeover, a (different) liquid has already been delivered which has unwanted consequences, such as an acid or lye instead of teat treatment liquid. The changeover can at any rate be detected only if the (different) liquid has passed the detector.

In this application, the term "liquid changeover" is understood to mean a changeover from a first liquid to a second liquid which is at least measurably different from the first liquid, or a changeover between a liquid and an empty through-flow cell or vice versa.

Special embodiments are described in the dependent claims, and in the part of the introduction to the description which now follows.

In particular, the buffer device has a content of at least a quantity of the liquid required for a predefined number of teat-related actions. Thus, a predefined number of teat actions can be carried out in some cases even after detection of a liquid changeover. This gives the farmer scope to perform possible corrective measures, for example if no more liquid is detected. There is also scope if an incorrect liquid is detected, since either the liquid in the buffer device sufficiently dilutes possible harmful liquid so that there is no further danger, or the liquid is stopped with an automatic valve or the like. The buffer device is, for example, a sufficiently large buffer container, or a line with sufficient content. At any rate, if the line is sufficiently long, the line itself then serves as a buffer supply. For example, several tens of millilitres are required per teat treatment, and the total line to the through-flow cell has a content of at least several litres. Thus, in the case of a treatment frequency of between around 4 per 5 minutes and 4 per 10 minutes, there is a reserve time in the region of several hours.

In practice, the presence or absence of liquid is often measured with an impedance meter. Teat treatment means in particular often have a medium to high intrinsic impedance, but within a reasonable range. The through-flow cell is not always completely filled, either due to a lesser delivery, or due to air bubbles or the like. In order to be able to detect an empty through-flow cell with sufficient reliability, an impedance threshold must not then be selected as too high. Nor must it be too low, since the teat treatment means may be incorrectly detected as absent with a high impedance compared with comparable means, even if they completely fill the cell. In practice, it therefore appears to be a disadvantage if the presence or absence of liquid is determined on the basis of impedance. The assembly according to the cited application will unnecessarily often establish a liquid changeover according to "empty", after which an alarm is given which is incorrect.

To solve this problem, the sensor system comprises, in embodiments, an impedance meter which is configured to measure the impedance value of the liquid in the through-flow cell and at least one optical detector to measure and determine a value of an optical colour characteristic of the liquid in the through-flow cell, wherein the colour characteristic is an indication of the extent to which a colour characteristic of the measured liquid differs from an optically perfectly clear liquid, in particular water. In particular, the sensor device is configured to give an empty alarm, indicating that the buffer container delivery line is empty, if the measured impedance value lies above an impedance threshold and the measured value of the colour characteristic lies below a predefined colourfullness threshold. Reliability is increased through the addition of the further detector, with the associated characteristic to be measured. Use is made here of the fact that the teat treatment agents are (almost) without exception strongly coloured, i.e. have a colour differing strongly from colourless and grey scales, including white. Most of the other agents used in dairy farming, on the other hand, have no colour (i.e. are clear) or have a whitish colour.

In particular, the optical detector is configured to emit light and transmit it through the through-flow cell, and is also configured to pick up and measure an intensity for at least two wavelengths of light which has passed along one or more optical paths through the through-flow cell. Thus, many different colour characteristics can be determined using the at least two wavelengths, such as ratios. For example, in particular embodiments, the colour characteristic is dependent on a ratio, for a respective optical path, of, on the one hand, the intensity of the light picked up at one wavelength, and, on the other hand, either the intensity of the light picked up at a different wavelength, or a total measured light intensity.

In particularly advantageous embodiments, the optical detector comprises at least one source of white light and at least one RGB sensor, which produces at least three signals (R, G and B), with one or more optical paths between each of the sources and RGB sensors, and the colour characteristic equals or is based on the standard deviation of the three intensity ratios of the three signals in relation to the average of the three intensity ratios, in particular the sum of this standard deviation for a plurality of the optical paths. The intensity ratio, i.e. the ratio of the colour intensity in R, G and B, divided by the total intensity as the sum of R, G and B, is thus compared with the average of the intensity values. The latter is of course in principle 1/3, so that the standard deviation becomes the root of the squares of R/(R+G+B)-1/3, G/(R+G+B)-1/3 and B/(R+G+B)-1/3. The standard deviation can thus be calculated for each required optical path and can then be summed to give the value of the colour characteristic. The inventor has discovered that the standard deviation of the RGB colours provides a simple and extraordinarily reliable colour characteristic with standard available sensors, which accurately indicates colour even in the presence of air bubbles. For colourless or white or absent liquids, this is a very low value, whereas, for most udder-care liquids, which are distinctly coloured, the value is considerably high, such as above 0.15. Alternatively, for example, the ratios of the (at least) three signals to the sum thereof could also be taken.

The optical detector very advantageously comprises in total at least three sources and RGB sensors, i.e. at least two sources and/or at least two RGB sensors, in such a way that there is at least one direct optical path, wherein the light emitted by a source is linearly incident on an RGB sensor, and at least one indirect optical path, wherein the light from a source is incident on an RGB sensor at least substantially via diffusion and/or reflection, and the colour characteristic comprises the aforementioned sum for at least the direct optical path and the indirect optical path. This ensures that both transmissive and reflective/diffusive measurements contribute to the colourfullness measurement. This appears to yield very good results in practice, such as with a threshold value of 0.65 for the situation with two direct optical paths, wherein the white light source and the RGB sensor enclose an angle of around 180° around a through-flow cell, and two indirect paths, wherein the white light source and the RGB sensor enclose an angle of 60° around a through-flow cell.

Moreover, the sensor control can preferably be configured to detect no liquid changeover, which could result in an alarm being given, which is unnecessary here, if an "empty" detection occurs. For this purpose, the sensor device is then configured to detect a liquid changeover between two different liquids in the through-flow cell if a change per time unit in the detector signal and/or a change in the detector signal is greater than a predefined change threshold value, or than a predefined threshold value, respectively. In particular, the sensor control is configured to generate a different-liquid alarm signal if the sensor control detects a liquid changeover in the through-flow cell, but no empty alarm applies to the through-flow cell. An unnecessarily disconcerting different-liquid alarm is thereby prevented from being generated. It is important to note that the empty alarm is also notified as such to the farmer or other operating person, so that he can determine and allocate his work on the basis thereof, and above all does not have to take action immediately. Conversely, it is of greater importance for a "different-liquid alarm", which must then similarly be notified as such. Two different alarms can thus advantageously be given by the assembly, i.e. an empty alarm and a different-liquid alarm.

The detection of a different-liquid alarm is based on the insight that, if a change of the liquid takes place, a changeover between the liquids will always be detected. A liquid changeover of this type generally occurs in cases where this characteristic, such as a colour, conductivity, etc., changes constantly or otherwise. It should be noted that the known systems generally compare a parameter value with an absolute value. As a result, gradual changes, which nevertheless cause changes in the measured parameter value in one and the same liquid, may produce false positive alarm signals. This embodiment restricts these false positive signals by examining the extent and/or speed of the change in this parameter value.

By generating a different-liquid alarm on detecting a liquid changeover, a control or operating person is able to take action if required, for example if a changeover of this type according to the actions already taken were not present.

A distinction is no longer made below between an empty detection and a detection of a pure liquid changeover, i.e. from the one liquid to the other. Given that a number of aspects are important for both detections, they will be discussed here in part again, in connection with the pure liquid changeover detection.

In embodiments, the change comprises at least one peak or trough in the detector signal, wherein the peak or trough has at least a predefined size. A peak is characterised here as usual by an increase followed by a decrease, and a trough by a decrease followed by an increase. If the smallest of a decrease and an associated increase has at least the predefined size, the associated trough or peak has at least this predefined size. In cases where only the decrease or increase attains this size, this involves a step rather than a peak or trough. The predefined size may, for example, be selected on the basis of practical tests, and is dependent in virtually all cases on the actual parameter to be measured. Thus, a noisy parameter will result in a greater predefined size for a significant peak/trough. Otherwise, an insignificant noise ripple would in any case result in a false positive liquid changeover detection. On the other hand, in the case of an excessive value, a small peak/trough could, in an otherwise non-varying or very slowly varying parameter, be disregarded (false negative). The person skilled in the art can himself simply determine suitable sizes of this type in practice, after selecting the parameter(s). This selection is dependent to some extent on the wish to have not too many false positive (too sensitive) or in fact not too many false negative (too insensitive) detections.

When a peak or trough of this type is detected, it is highly probable that this involves an interface between two liquids, and therefore a changeover from the one liquid to the other. A changeover of this type is at any rate often characterised not only by a change in stable values of a parameter, such as colour, conductivity, which depend on the intrinsic characteristics of the liquids concerned, but also on possible consequences of reactions and the like at the interface between two liquids. This interface, or rather interface area, may then differ from both the first and the second liquid.

In particular, the peak and/or trough has at most a predefined length. This measure serves to prevent substantial, but very slow changes, such as, for example, caused by a gradual heating and re-cooling of the liquid, such as in the daily temperature pattern, from being regarded as a liquid changeover. The predefined length (or time period in many cases) can be selected on the basis of the design of the sensor device. It may, for example, lie between several tenths of a second to one second or five. A number of parameters which can be taken into account are:
- the average expected flow rate. In the case of a higher rate, the interface area or liquid changeover area will also be passed more quickly. The length/time period can be smaller.
- the distance from a liquid source to the sensor. In the case of a greater distance, more mixing of the interface area with the respective liquids may occur, with broadening of the possible peak/trough. The length/time period must be longer.
- the speed of the detector device, which must at any rate be fast enough to measure a passing liquid changeover.
- the thickness of the liquid line/the through-flow cell. The thinner the line or cell, the more difficult it will be for mixing to occur. The length/time period can be smaller.

It should be noted that the detection of a peak or trough, or a temporary, considerably great and fast change in a parameter may well indicate an interface area or liquid changeover. This is often more evident than a gradual change. At any rate, if only the exceeding or otherwise of a threshold value in the absolute sense is examined, the gradual change in value may be caused in the intrinsic liquid, for example, by mechanisms such as heating or ageing. Even in such cases, a certain interface area will often or even nearly always be noted in which a parameter value reveals a peak or trough. In a more general sense, it is therefore advantageous if the sensor device is configured to detect a liquid changeover if a change per time unit in the detector signal is greater than a predefined change threshold value. Furthermore, if the value of the parameter itself changes by more than a threshold value, this is even more clearly an indication of a liquid changeover. It is therefore even more advantageous if the sensor device is configured to detect a liquid changeover when a change in the detector signal is furthermore greater than a predefined threshold value. In addition, the exceeding of an absolute value of the parameter can result in an even more accurate detection. It is therefore even more advantageous if the sensor device is configured to detect a liquid changeover if the detector signal furthermore exceeds a predefined absolute value.

In particular, the change threshold value and/or the threshold value is/are a function of the detector signal during a predefined time period. Thus, the (change) threshold value may, if required, be dynamically adapted to the value of the detector signal in order, for example, to be able to take account of a drift or the like, which is insignificant per se for the detection. More particularly, the change threshold value and/or the threshold value is/are a function of the variance in and/or the standard deviation or maximum change of the detector signal during this time period.

In embodiments, the characteristic, in particular for determining the liquid changeover or different-liquid alarm, comprises an optical characteristic of the liquid. One advantage of choosing an optical characteristic is that it can be determined in many cases very quickly and accurately, and furthermore mainly non-invasively, i.e. with very little or no influence on the liquid.

In embodiments, the sensor system, as stated, comprises a light source which is configured to transmit optical radiation through the cell, wherein the detector comprises an optical detector which is configured to pick up and detect emitted optical radiation which has passed through the liquid. By thus working with light, the aforementioned advantages of using an optical characteristic with accurate and fast measurement can be achieved. The light source is preferably configured to emit the optical radiation in a beam. This not only simplifies the manipulation of the optical radiation, but also restricts the area which interacts with the liquid. A further significant advantage is that the area of interaction can be selected, for example at the bottom of the through-flow cell, where liquid will most often be present. The detector advantageously comprises a plurality of optical detectors, more advantageously a CCD or CMOS device, even more advantageously an RGB chip. A relatively very economical detector is thus obtained, which can simultaneously receive a plurality of signals. This concerns not only different wavelengths, i.e. red, green and blue, but also, if required, from different angles, certainly if the chip has a certain expanse.

In particular, the characteristic is at least one of absorption of the optical radiation, refraction of the optical radiation, diffusion of the optical radiation and reflection of the optical radiation. All of these parameters, and particularly also a combination thereof, can form useful parameters for detecting a liquid changeover. Thus, the absorption of the one liquid may be much greater or smaller than that of the other, resulting in a substantial change in the signal in the liquid changeover. It is also possible, in the case of liquids which react with one another, that a chemical reaction may even occur, resulting in an opacification or precipitation by reaction products. In this case, even in the case of intrinsically clear liquids, a peak signal may occur in the absorption, and this may similarly apply to the diffusion. Precipitation may also be present since, for example, residue or the like is also drawn out of the container from below. However, whether this involves residue or chemical precipitation, an alarm signal is appropriate in both cases. It is also possible, even in the case of intrinsically clear liquids, that the refractive index differs, which is considerably simple to establish with a beam of optical radiation. Other possibilities or combinations can easily be inferred by the person skilled in the art on the basis of the above. Furthermore, equivalent or complementary parameters, such as transmission in the case of absorption, are deemed to be covered by the scope of protection.

In embodiments, the light source comprises a plurality of partial light sources which emit optical radiation at different wavelengths. It is therefore alternatively or additionally possible to measure one or, advantageously, more parameter values for different wavelengths, so that more information relating to the liquid and changeovers therein can be obtained. Here, the term "different" means in particular that the wavelengths ranges do not overlap within FWHM. At least a part of the light sources is advantageously monochromatic, particularly with a wavelength range of a maximum of 50 nm, such as LEDs, or lasers. In the case of overlapping wavelength areas, alternating control can prevent unwanted signal overlap. Alternatively, one or more partial light sources can emit broadband radiation, such as "white" light, wherein, for example, one or more sensors are then provided with a filter to make a selection of the radiation.

In embodiments, it is possible to measure the value change of at least one main parameter before and after an unstable period as a detector signal for determining a liquid changeover. If the value change exceeds a positive or negative threshold, a liquid changeover is inferred. The unstable period is determined as the period in which a change in at least one instability monitoring parameter exceeds an instability threshold. Change may in turn comprise "absolute value change" per time unit or otherwise, "relative value change" per time unit or otherwise, absolute or relative standard deviation during a predetermined sampling period, etc. The instability parameter(s) may be identical to or overlap with the main parameter(s), or may comprise at least one other parameter. The insight behind this embodiment is that the one parameter is highly suitable for indicating that a change could be taking place, i.e. an alert (the instability monitoring parameter), while another parameter can provide more accurate information on the type of liquid(s), such as to assess whether the liquids are in fact fundamentally different before and after the unstable phase. It is at any rate possible that a new batch of essentially the same liquid has been presented. A difference may then in fact occur in the liquid due to temperature difference, ageing, concentration difference or the like, i.e. a liquid changeover, but this is perhaps not fundamental. Making use of a (more) essential parameter for the determination then helps to prevent false alarms. For example, the ratio between the measured optical radiation in two (or more) wavelengths is selected as the instability monitoring parameter, and the total intensity value in these wavelengths and/or even over the entire spectrum as the main parameter. The unstable period begins or ends when the (absolute or preferably relative) standard deviation in this ratio (if required in the sum of the ratio for different wavelength pairs) rises above a threshold or falls once more below it. The main parameter value(s) measured immediately preceding the unstable period then form(s) the initial value, and the main parameter value(s) measured immediately after the end of the unstable period then form(s) the final value. If the final value(s) and the initial value(s) differ by more than the change threshold, an actual liquid changeover is then inferred. The selection of the colour ratio in this case is suggested in that, as the inventors have discovered, air bubbles have only a small influence on the colour ratio, in contrast to their influence on the intensity value. As a result, air bubbles also carried along will not cause an unstable period, unlike actual changes in the colour ratio, such as, for example, those occurring in a real liquid changeover. These embodiments ensure that an unstable period which is not a real liquid changeover is not detected too often. This not only saves on computing power, but also reduces the risk of false alarm messages. Furthermore, it is also always possible to apply this method of determining a liquid changeover along with/in addition to other method(s), or just as an additional criterion.

An "empty" detection is advantageously first carried out in each case at the end of an unstable period, i.e. it is determined on the basis of detector values whether the through-flow cell is empty, and only thereafter is it detected whether a liquid changeover has taken place. The control is advantageously configured for this purpose. This prevents unnecessary calculations and, above all, unnecessary different-liquid alarms.

In particular, the light source and/or at least one partial light source and/or at least one optical detector is fitted in the cell. This avoids influencing of the optical radiation by the wall of the cell, for example due to scratches or discolouration.

Alternatively or additionally, the light source and/or at least one partial light source and/or at least one optical detector is fitted around the cell, wherein the cell is translucent or transparent at least at the location of this light source or partial light source. Thus, the (partial) light source cannot be influenced by the liquid, which, for example in the case of aggressive liquids, is a great advantage. Moreover, it is simpler to replace, restore or the like the (partial) light source. If required, the translucent or transparent part of the cell at the location of the (partial) light source or optical detector can be formed by a window which can be made from suitable material which is, for example, compatible with the liquid. The cell as a whole can also be made from a material of this type, such as a tube of illuminating material, such as polysulfone or polycarbonate, or preferably of a glass, such as borosilicate glass, for high scratch and chemical resistance.

Advantageously, in the case where the through-flow cell is cylindrical and is made from an illuminating material and the (partial) light source is positioned outside the through-flow cell, the optical detector is positioned in the path of the emitted light beam and the angle of emission of the beam of the light source, the refractive index of the illuminating material of the through-flow cell and the cross section of the through-flow cell are aligned with one another in such a way that, when the through-flow cell is filled with a required liquid, at least half of the emitted beam, and preferably substantially the entire beam, reaches the optical detector, whereas, in the absence of liquid in the through-flow cell, less than half, preferably rounded at most a 0.2 part of the beam, reaches the optical detector. The figures quoted here apply to the non-absorbed and non-diffused part of the beam. The aforementioned measure offers the advantage that it is very simply possible to indicate the presence of liquid, and in particular the presence of the required liquid. The liquid in the cell then acts as a convex lens which directs the beam onto the opposite-lying detector. Without liquid, the beam continues to spread. This causes a (very) substantial difference in brightness between a cell with liquid and a cell without liquid. Even in the case of absorbing, but not extremely absorbing liquids, the signal with liquid can always be stronger than without liquid. A set-up of this type can therefore also act as a liquid presence detector.

In one embodiment, the light source or at least one partial light source is configured to emit a light beam, and the detector is positioned and configured to detect the emitted beam that has passed through the through-flow cell. If the radiation is emitted in the form of a beam, it is, as indicated above for the light source in general, possible to manipulate the optical radiation, but also to restrict the area that interacts with the liquid, differently, if required, for each partial light source. A further significant advantage is that the area of interaction can be selected, for example at the bottom of the through-flow cell, where liquid will most often be present. A plurality, for example two, three or four, partial light sources, which each emit a light beam, are preferably provided, and also a plurality of detectors, such as two, three, or four, to detect the plurality of light beams. The partial light sources may comprise light of a restricted wavelength range (monochromatic or narrowband light). They may also, and even advantageously, emit white light or broadband light, including, if required, (near-)infrared. The detectors may accordingly be monochromatic, narrowband or broadband sensitive, such as the partial sensors of an RGB sensor. This sensitivity may be intrinsic, or may also be caused by filtering of the light incident on the sensor. Thus, due to the high luminous intensity often to be achieved, in particular for white light, which is also available for many different characteristics and sensors, different effects such as transmission, reflection and absorption can be detected and measured for different circumstances, such as for different angles, distance through the liquid, different wavelength, etc., and particularly also for combinations of these characteristics. It is this last feature, the ability to measure a plurality of characteristics simultaneously, which is a great advantage of the present sensor system. A liquid changeover can thus be more reliably established. It will always be possible to detect a liquid changeover, in particular from a required and known liquid to any other, unwanted liquid, if the characteristic that changes is known. However, this is quite unpredictable. A multiplicity of characteristics can therefore be measured with the present system, so that a distinct change in a characteristic, even better a significant and simultaneous change in at least two characteristics, can reliably indicate a changeover to a different, unwanted liquid.

As stated, in one embodiment the assembly comprises a conductivity or impedance meter to measure the conductivity or impedance of the liquid in the cell. Conductivity is a valuable parameter for characterising liquids. The through-flow cell highly advantageously comprises a tailpiece on each of its ends. These serve to connect the cell to a delivery and a removal line. The tailpieces are advantageously configured as electrodes for the conductivity or impedance meter. This has the great advantage that no separate fed-through electrodes are required in the through-flow cell itself, so that no leakage needs to occur. Furthermore, it is much simpler to manufacture. Moreover, a large electrode surface is available, so that the measurement is much less sensitive to air bubbles, contamination and the like. Also, the electrodes do not protrude into the path of the liquid, so that the flow thereof is influenced as little as possible. However, some electrical insulation is required between the tailpieces. This can be provided by means of insulating material between the tailpieces and the through flow-cell and/or a through-flow cell which is itself made from insulating materials, such as plastic or, preferably, a glass.

The sensor control is advantageously configured to detect a liquid changeover if the detector signal changes by more than a predefined threshold change within a predefined time period. As previously indicated, it is highly probable and in any case sufficient for an alarm signal that there is a liquid changeover with sufficiently substantial change, in particular per time unit, in one or more measured parameters.

Embodiments may comprise a flow rate indicator, which is configured to supply the sensor control with a liquid flow rate signal indicating a flow rate of the liquid in the through-flow cell, wherein the predefined time period is dependent on the flow rate of the liquid. The sensor device can thus take account in an appropriate manner of the rate at which the liquid flows through the cell. In any case, if the liquid, for example, flows very slowly, even a gradual change in the signal may already be a reason for an alarm, whereas, in the case of a very fast-flowing liquid, a short peak in the signal may well signify more than merely a random noise ripple. Allowance for the liquid flow rate helps with the precise evaluation of the measured values and changes.

In an alternative or additional measure, the light source is configured to emit a light beam through the through-flow cell, wherein the device comprises an optical sensor which is configured to detect a detection position of the light beam which has passed through the through-flow cell on the optical sensor. The characteristic advantageously comprises the detection position, in particular a change in this detection position. Alternatively or additionally, the characteristic comprises the size or size change of a beam on the detector which can of course per se again be considered to be made up of position changes of the extremities of the beam. These embodiments make use of the insight that, in the case of a constant liquid, the position assumed on the detector by a light beam of this type passing through the liquid will similarly remain constant. If the liquid changes, this will be expressed, for example, as a different refractive index, and therefore a different position on the sensor. It must be noted that this will apply in particular to a beam obliquely entering the liquid, wherein in this case the refraction angle of entry will change. If a very oblique angle of incidence is chosen, preferably of 60° or more in relation to the perpendicular on the liquid body, or the through-flow cell at the location of the light entry, even a small change in the refractive index will cause a considerably large position change. Similarly, a very oblique, preferably substantially glancing, incidence on the optical sensor will have the effect that a small change in the refractive index causes a substantial position change. In this application, a very oblique incidence is an incidence at less than 30° to the sensor surface, and a substantially glancing incidence is an incidence at a maximum of 10° to the sensor surface, wherein, however, other angles are certainly not excluded. It must be noted that an optical sensor of this type can also operate as a liquid presence detector, given that the position of the beam due to refraction on air will differ from the position due to refraction on any liquid in the cell. Furthermore, the sensor system or corresponding sensor device can serve as an accurate absolute determiner of the refractive index.

In particular, a changeover is characterised by (mixing) turbulence and/or a local temperature rise. The aforementioned position change relates in particular to a more or less stable beam position before and after passing a liquid changeover. As already previously indicated above, a reaction can also take place at the interface of two different liquids, wherein other substances occur, which can of course also ensure a different refractive index locally only. Thus, even if two different liquids have the same refractive index, it may still be that this is no longer the case in their interface area. A temporary change in the detection position is then still a reliable indicator of a liquid changeover. A time-related change threshold can therefore similarly be important for the position change: if said threshold is exceeded, it is highly probable that a liquid changeover has been detected. The sensor control can then be configured accordingly for the detection thereof.

Another reason why a temporary change in the detection position on the optical sensor is important is that the beam may be reflected at the interface between two liquids, again due to differences in the refractive index. In theory, and in the simplest approach, this interface in the case of non-mixing and non-reacting liquids, is an area perpendicular to the wall of the through-flow cell. It must be noted that it is advantageous here to have a light beam which is obliquely incident on the liquid, but at a wider angle to the perpendicular, i.e. at a narrow angle, and preferably glancing, in relation to that interface. At any rate, a small difference in the refractive index will then also cause a large reflection. However, in practice, the interface will in most cases consist of turbulence. In this case, a quite "rough" position signal will be detected on the optical sensor. The sensor control is therefore preferably configured to detect the time change of the detected position on the optical sensor, advantageously in order to detect a liquid changeover if this time change exceeds a predefined threshold. It must be noted that the time change in this case is preferably regarded as the cumulative sum of the absolute changes, i.e. a change back and forth counts as an ABS(change back) + ABS(change forth). Nevertheless, the maximum position change, such as, for example, an amplitude of a periodic change, could also be detected as a liquid changeover.

Special embodiments of the sensor system or the sensor device are **characterised in that** the latter comprises an image-recording device, such as a video camera, which is configured to record an image of the liquid in the through-flow cell, and wherein the sensor control comprises image-processing software to process the image, and is configured to detect a liquid changeover if the image reveals a predefined minimum change with time. The image recorded by the image-recording device, such as a CCD or CMOS camera, which must of course be a dynamic image or at least a repeatedly recorded image, is analysed here by the image-processing software. The latter compares the images with one another, either consecutive images or each new image with a specific standard such as a running average of the preceding x images, and determines the quantity of change therein. The latter comprises, for example, the change in image information per pixel, summed over the pixels of the image. In theory, with a completely homogeneous liquid, no single change will occur, whereas, if an interface flows past, a very large amount of change will then occur in the image. It must be noted that precisely the beam visible in the image and the brightness, position and colour thereof will determine a large part of the image information. Refraction, colour change, local turbidity due to reaction products, turbulence etc., will all have their impact on the image information. Optical techniques in particular will be able to provide a high degree of sensitivity and reliability here.

The device advantageously comprises a gas bubble suppression device, which is fitted in the direction of flow upstream of the through-flow cell. This gas bubble suppression device serves, as far as possible, to prevent false positive detections as a result of gas bubbles. At any rate, a liquid-gas bubble changeover is a changeover which provides a clear signal, but this does not indicate a liquid changeover. Thus, the refractive index of gas is always lower than that of liquid, and reflection is therefore also always possible on the gas bubble.

The gas bubble suppression device is not particularly limited, and may comprise, for example, a bubble collection device such as hairs or a mesh. The through-flow cell advantageously comprises a part which has a greater cross section than the liquid delivery opening. The liquid can thus to some extent come to rest in the wider, thicker part in order to allow possible gas bubbles to rise upwards, or even to the surface. The system as a whole is then advantageously a type of air-liquid separator. In particular, that part extends to below the liquid opening. There, it can perform its work as early as possible in the flow of liquid.

In advantageous embodiments, the detector comprises a temperature sensor which is configured to measure the temperature of the liquid in the through-flow cell. This may, for example, be favourable for being able to carry out possible temperature correction on the measured values. Almost every parameter could thus to some extent be temperature-dependent, such as the refractive index (and thereby similarly the beam detection position on an optical sensor), absorption, etc. As a result of then being able to correct for temperature, a false positive liquid changeover detection can possibly be prevented. For example, if the external temperature rises, the temperature of the liquid could also rise, but this does not necessarily have any relevant significance for the liquid.

In embodiments, the characteristic comprises the temperature of the liquid. It could at any rate occur that, instead of a liquid at a required temperature, such as, in particular, slightly below body temperature, a much colder or hotter liquid is used. This could result in discomfort or even danger for the animals to be treated and the like. Given that, if the delivery lines are not too long, the temperature difference between the first and second liquids will be maintained, except for a changeover in the interface area, an alarm signal is correctly generated in the event of an increase or decrease by more than a change threshold, in particular if the change occurs by more than a change threshold within a predefined time period, more particularly within a liquid-flow-rate-dependent time period. The length, and possible insulation, of the delivery line, and the delivery rate of the liquid can thus be taken into account.

In embodiments, the sensor system comprises a flow disturbance element, which, viewed in the direction of flow, is positioned upstream of the detector. The flow disturbance element, which, for example, projects into the through-flow cell or liquid-delivering line, will cause turbulence in liquid flowing past. In the case of a homogeneous liquid, this will not or will virtually not be detectable. However, if a liquid changeover is present, this turbulence will ensure that the changeover extends over a larger volume, and as a result will be longer and more clearly visible to the detector(s). A flow disturbance element may, for example, be a small pin specially fitted for this purpose, or, for example, an electrode or sensor for conductivity/impedance or temperature or the like, which already projected into the liquid path.

In particularly appropriate embodiments, the sensor control is configured to generate an alarm signal if the temperature reveals a peak of at least a predefined size within a predefined time period, more particularly within a liquid-flow-rate-dependent time period. These important embodiments are based on the insight that a local temperature rise can also often occur due to a reaction taking place during a liquid changeover, in the interface area between the two liquids. The reaction heat may originate from a chemical reaction, but also, for example, from the mixing or dissolving of the one liquid in the other.

Even if the first and second liquids have the same temperature, a peak of this type may occur between them, indicating a liquid changeover. In practice, the first and second liquids will not always have the same (basic) temperature. Nevertheless, the term "peak" means in particular that, and the sensor control is configured to generate an alarm signal if, the temperature reveals a rise by at least a predefined rise threshold, followed by a fall by at least a predefined fall threshold. The rise and fall thresholds do not have to be equally great. Nevertheless, it is in fact clear that the interface area is then hotter than both the first and the second liquids. This is a clear indication of the reaction between the two liquids, which is virtually always unwanted, and in any event indicates that a liquid changeover is taking place. The rise and fall thresholds may, for example, each have a value of between 1 and 5°C. The possible predefined time period may have a value of, for example, between 1 and 5 seconds. This means, for example, that a temperature rise of at least 3°C within 5 seconds, followed by a fall by at least 2°C within 5 seconds sufficiently reliably indicates a non-noise-related temperature peak, which is indicative of a liquid changeover.

It should be clear that, as already previously mentioned above, a combination of a temperature measurement with an optical measurement and/or a conductivity/impedance measurement provides an even greater reliability in liquid changeover detection.

Furthermore, it is noted that the provision of a plurality of light sources and a plurality of detectors, preferably around a space with a round cross section, such as a cylindrical through-flow cell, offers the advantage that many related characteristics, such as diffusion and reflection, are measured at different angles and/or in different positions. This offers possibilities for calculating the basic parameters on the basis of the multiplicity of detector signals. Where a single detector cannot distinguish the component parts of a signal which is in any case made up of transmission, refraction and one or more reflection and/or diffusion signals, these can be derived from the multiplicity of detection signals through deconvolution.

As described, the invention relates to a dairy animal treatment assembly. This may be provided in a partially or fully automated milking device, or a separate animal treatment device. A number of further special embodiments of the dairy animal treatment assembly are discussed below.

A dairy animal treatment assembly of this type as a milking device may, for example, be an automatic milking device, wherein a robot arm is configured to fit milking cups to teats of a dairy animal. A device of this type offers advantages known per se for milking without supervision. A dairy animal treatment assembly of this type often carries out a teat-related treatment several times per day on each dairy animal from the herd. Furthermore, a teat is a very sensitive part of the dairy animal. It is therefore very important that a treatment of this type is performed very reliably, with as little risk as possible of discomfort or even danger through the use of an incorrect liquid. The use of an assembly according to the invention in a dairy animal treatment assembly of this type is therefore of great advantage. In such a case, it is favourable if reliability and animal safety are increased, such as with the sensor and/or teat treatment device according to the invention. However, the devices are also applicable in a milking device for manual connection of milking cups, wherein a teat treatment is applied. An example of a device of this type is, for example, the RotaryMATE from the company Green Source Automation, which has a robot arm in a milking carousel with manual cup connection which automatically sprays the teats with a teat treatment means. Although an operating person is therefore in each case in the vicinity during milking and the other treatments, this work is often carried out by people without special training, and the monitoring of this spraying process in particular will gain advantages from the present invention.

The assembly comprises a supply container, for example for teat treatment liquid, which can be closably connected with a controllable valve to the liquid line, wherein the control device is configured to cause the controllable valve to close the connection between the supply container and the liquid line on the basis of the generated different-liquid alarm. It will be clear that the closing of the liquid supply on detection of a liquid changeover can prevent substantial damage, particularly if the valve is located far enough upstream of a possible outflow opening. This will depend on the liquid flow rate and the speed at which the control device can establish a liquid changeover, but this is in practice simple to set.

In particular, the teat treatment device comprises a teat cleaning device and/or a teat aftertreatment device. This is a very direct way to carry out a teat-related treatment which either indirectly or, more particularly, directly applies liquid to the teat. Examples of treatments of this type are spraying or coating of the teat, or brush cleaning of the teats with a brush moistened with liquid. The liquid comprises in particular teat cleaning, teat disinfectant or care means. It should be clear that a high risk exists for the dairy animal if a teat were to be sprayed with, for example, an aggressive cleaning agent, such as a lye or acid or other milk line cleaning means, instead of a teat disinfectant means.

The invention will be explained in detail in the form of a number of non-limiting examples, and on the basis of the drawing, in which:
Figure 1 shows a schematic view of a dairy animal treatment device according to the invention;
Figure 2 shows a schematic cross-section view of a sensor device of a dairy animal treatment device according to the invention;
Figure 3 shows a schematic cross-section view of a different sensor device;
Figure 4 shows a schematic cross-section view of a further different sensor device;
Figure 5 shows a diagram with a possible measuring signal as a function of time; and
Figure 6 shows a diagram with a different possible measuring signal as a function of time.

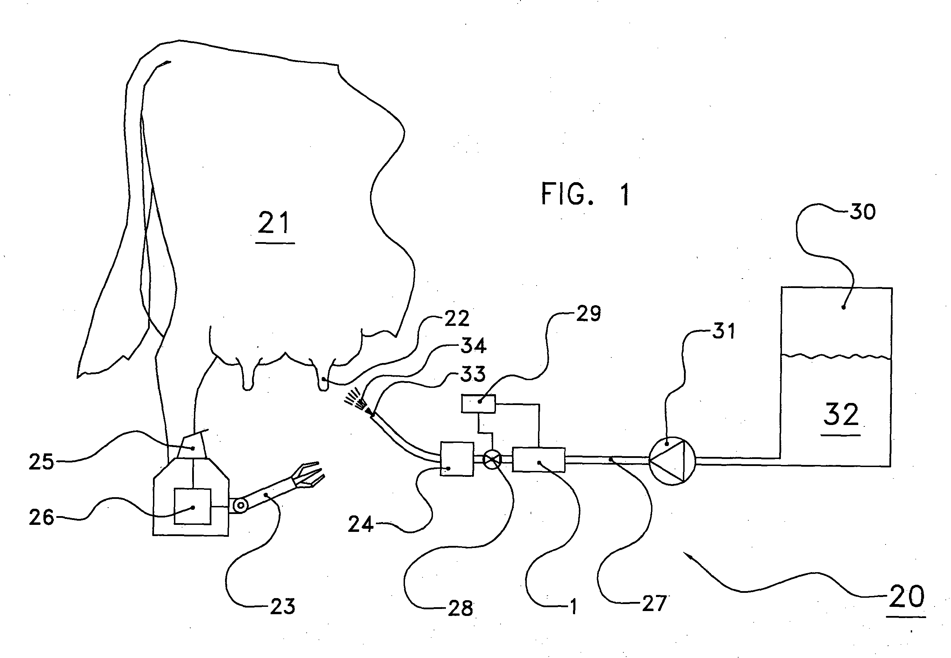

Figure 1 shows a schematic view of a dairy animal treatment device 20 according to the invention. Herein, 21 is a dairy animal with teats 22. A robot provided with a robot arm 23 and a teat detection system 25 and a robot control 26, and also a liquid line 27, a valve 28, an alarm signal generator 29, a supply container 30 with teat treatment liquid 32, a buffer container 24 and a pump 31, a spray head 33 for a spray mist 33, and a sensor device 1 are furthermore present.

The robot serves to apply the spray head 33, as an example of a teat treatment device, to a teat 22, in a manner known per se, with a robot arm 23 and teat detection device 25 known per se, under the control of the robot control 26, which may furthermore be connected to the sensor control, not shown separately here.

If the sensor device 1 establishes that the liquid 32 in the through-flow cell, and therefore in the supply container 30, gives reason for an alarm, this will cause the alarm generator to produce a signal. If, for example, the sensor device establishes a different liquid, it will produce a different-liquid alarm and close the valve 28 in the line 27. Danger for the dairy animal 21 is thus reduced. It must be noted that the content of the buffer container 24 will still be sufficient to carry out a number of treatments such as spraying of the teat with the liquid 32, although the pump 31 must then be fitted after the valve 28. In some cases, the part of the liquid line 27 to the spray head 33 may have sufficient volume to produce a required buffer effect. This obviously depends on the liquid consumption per time unit and the required buffer time.

In other cases, a different liquid is not detected, but, for example, no liquid. An empty signal can be sent by the sensor device 1 to the farmer, after which there will still essentially be enough time to replenish the supply in the container 30.

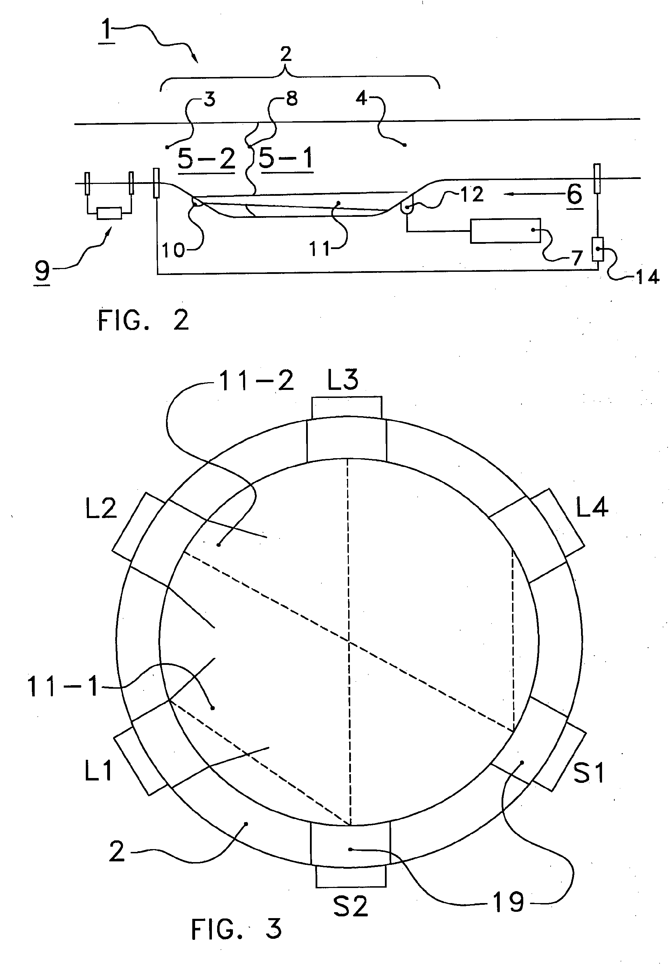

Figure 2 shows a schematic cross-section view of a sensor device 1 of a dairy animal treatment device according to the invention. Here, 2 forms a through-flow cell with a liquid delivery opening 3 and a liquid removal opening 4, and therein a first liquid 5-1 and a second liquid 5-2 with an interface 8.

A detector device is generally indicated by 6, with a sensor control 7. An optional additional liquid presence detector is indicated by 9, while 10 denotes a light source which emits a light beam 11 to the optical detector 12. An optional conductivity meter is indicated by 14.

The through-flow cell 2 is shown here as a part of a design, not separately shown, through which liquid flows, in via the opening 3 and obviously out again via the opening 4. The presence of liquid can be detected here with the (optional) liquid presence detector 9, consisting here of two electrodes with a conductivity or resistance meter between them. If liquid is present between the electrodes, the conductivity will be much higher than if that is not the case. Furthermore, the upstream electrode(s) serve(s) in particular as a liquid flow disturbance means or turbulence generation means in order to render turbulence at an interface 8 more clearly visible. Moreover, the detector 9 can also be positioned on the upper side of the line to ensure that a presence signal is not simply generated in the event of a thin layer of liquid near the bottom. It must be noted that liquid presence can also often be inferred from values of a liquid characteristic measured by the sensor device 1 itself. Furthermore, the location of the detector 9 will not be so critical in the case of vertical lines, but the effect thereof will be critical for high reliability.

Figure 2 shows the presence of liquid, and in fact a first liquid 5-1 and a second liquid 5-2, with an interface 8 between them. In this case, the liquids are non-mixable, such as, for example, water and oil. In practice, the interface 8 is more likely to be an interface area or transition area in which mixing and/or even a reaction can occur.

It can furthermore be seen that the through-flow cell comprises a lowered and widened part at the bottom, through which possible gas bubbles in the liquid will disappear at least at the bottom out of the liquid. A light source 10 is also provided there which emits a light beam 11, which, after passing through the liquid, is picked up by the optical detector 12. The light source 10 is, for example, a small incandescent lamp or, preferably, an LED or laser. The light used is, for example, visible (near-)infrared light, although medium and far-infrared and UV light are not excluded. The light is spectrally broadband or narrowband, to even substantially monochromatic. The wavelength or wavelength range is preferably adapted to the liquid that is specifically to be used. This can also, and advantageously, be done with a white light source, such as a white light LED, in combination with optical sensors with filters or the like, which thus have a limited detection range. Here, an embodiment is **characterised in that** the type of light used has a main wavelength which is adapted to the colour of the liquid specifically to be used. This makes use of the insight that all, or at least most, teat care liquids have a (visible, non-white) colour, whereas all, or at least most, cleaning agents used in practice for dairy animal treatment devices are visually colourless. Therefore, if, for example, light with the same colour as the liquid to be used is employed, which will therefore produce a considerable amount of absorption, a much lower absorption will be measured in the event of a changeover to a colourless liquid. This signal will very clearly indicate at any rate that the correct liquid is no longer present in the line.

It should be noted that the beam 11 is drawn as a quite narrow beam. Alternatively, a broad beam can also be emitted, or even unfocused light. This offers the possibility of an optical detector 12 with a larger surface, or a plurality of detectors 12 with together a larger covered surface. The signal will thus average out more and be less sensitive to disturbance due to, for example, air bubbles.

The detector 12 may furthermore be any suitable optical detector, such as photodiodes, light-sensitive resistors, etc. A special optical detector relates to a CCD camera with image-processing software. A sensor of this type may then be configured to pick up an image of the emitted radiation and analyse that image. If an interface passes through the image, the image will be deformed. This occurs in particular in the case of liquids with a different colour, brightness, refractive index or the like. The image of the optical radiation or beam will then undergo a considerably substantial change, which can be reliably detected by the sensor control with the image-processing software. Alternatively, a CCD or CMOS chip of this type can also be used to detect the light, in fact in three colours, and possibly also as "clear", i.e. without a colour filter excluding the entire brightness from the signal.

The similarly shown conductivity meter 14, with two electrodes shown, may additionally be used for liquid characteristic detection in that it can detect whether a change in conductivity occurs. For example, this is measured between the electrodes, but each of the two electrodes is preferably configured to determine the conductivity itself and locally. A double conductivity measurement is then performed, which is slightly deferred in time. This can serve to provide more reliable measurement, but also to determine the flow rate of the liquid. In any case, each variation seen by the electrode located upstream or other meter will be seen sometime later by the second electrode or other meter. The liquid flow rate can be determined by dividing the distance between the electrodes (or meters) by the time difference, the entirety thus forming a liquid flow rate meter. A dedicated liquid flow rate meter, which measures this flow rate only, can obviously also be provided. In practice, liquid flow rates appear to lie in the range from several cm to tens of centimetres per second. The sensor device and sensor control must be adapted to such a flow rate.

Figure 3 shows a schematic cross-section view of a different advantageous sensor device of a dairy animal treatment device according to the invention. This comprises LEDs L1 and L2 located on the wall of the through-flow cell, and also optical sensors S1 to S4 outside the wall behind transparent windows 19. The LEDs emit beams 11-1 and 11-2 respectively.

The light sources L1 and L2 shown may, for example, emit different types of light, such as white light, red light, green light and blue light. Overlapping wavelength areas are not a problem if the LEDs are alternately energised. The emitted beams are influenced by the liquid present in the through-flow cell, and undergo, for example, absorption or diffusion. In this example, the respective associated beams are picked up by optical sensors S1, S2, S3 and S4. More LEDs (partial light sources) and (optical) sensors can obviously be provided. In this embodiment, it is important that all kinds of optical characteristics of the liquid can be detected for a plurality of types of light, and therefore also changes therein. This substantially increases reliability, also in that characteristics can be determined for a plurality of light paths.

The windows 19 shown are preferably transparent, at least to the radiation emitted by the associated source/LED, or to the radiation to be picked up by the detectors 12-1, 12-2. Alternatively, the entire through-flow cell or even the line is transparent to this radiation, such as a through-flow cell made from borosilicate or other glass, or a plastic such as polycarbonate or polysulfone or the like. The use of windows 19 is favourable if the (partial) light source(s) or optical detector(s) are sensitive to the liquid, or, for example, for exchanging or repairing them more easily.

Many light paths are of course possible in the embodiment shown. Thus, each LED L can emit light which is directly or indirectly picked up by each sensor S. It is favourable to select the most usable signals in order to restrict the computing operations. A favourable combination appears to be a direct signal and a signal as indirect as possible, in particular a combination of one or more sets of a light source to a sensor located directly opposite, and also one or more sets of a light source and a sensor located as close as possible. The inventor has found that a combination of the direct optical paths L2 to S1 and L3 to S2, and the indirect paths L1 to S2 and L4 to S1 delivers very usable results. These four paths are indicated in the figure by four broken lines. Other combinations, such as of a single direct optical path and a single indirect optical path, or indeed more, or indeed all kinds of different, dedicated combinations are obviously possible. The positioning of the sensors is also to a certain extent free. The regular distribution around the (round) through-flow cell as drawn is one, but certainly not the only, possibility.

The sensors S1 - S4 may, for example, be photodiodes or other light-sensitive devices, but are preferably RGB sensors, which provide three colour signals in a simple, compact and reliable manner. Other sensors, such as sensors supplemented with infrared or amber, are obviously also possible.

For example, one or more parameters of the aforementioned optical paths are measured and/or calculated. According to the invention, a usable parameter is the "colourfullness" K, to be defined as the standard deviation of the ratio of the respective colour intensity values and the total thereof, such as red, green and blue in RGB sensors. In other words, K = σₚₐₜₕ(R/(R+G+B), G/(R+G+B), B/(R+B+G)), referred to below as σₚₐₜₕ(R,G,B) for short, for each optical path. In the aforementioned advantageous example with four optical paths, the colourfullness sum is then ΣK = Σσₚₐₜₕ(R,G,B), summed over the paths. If the colourfullness sum ΣK falls below a threshold, this is an (additional) indication that at least no coloured liquid is measured, such as, in particular, no teat treatment liquid. For example, a value for the threshold in the case of the four paths and the three colours, in the set-up shown, for teat treatment liquids lies at a value of around 0.65. If an impedance or conductance above or below a typical threshold is furthermore measured, this is an indication that no liquid is detected. An "empty" alarm can then be given, but no "different-liquid" alarm needs to be given. In a general sense, a "no liquid" alarm could have a lower priority than a "different-liquid" alarm, such as, for example, an alert signal in the management system as opposed to an SMS message, sound signal and/or paging message.

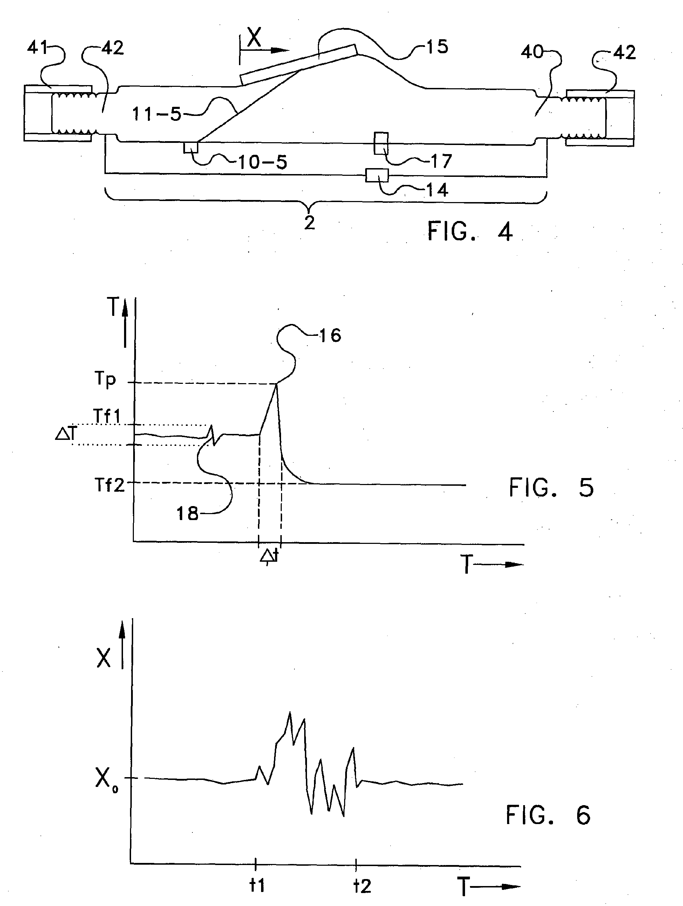

Figure 4 shows a schematic cross-section view of a further different sensor device. Herein, a light source 10-5 which emits a beam 11-5 which is detected by a location-sensitive optical detector 15 is provided in the through-flow cell 2. A thermometer is denoted by 17. Furthermore, two tailpieces are denoted by 40, and a delivery line and a removal line are denoted by 41 and 42 respectively.

The source 10-5 is shown with a beam 11-5, which passes obliquely through the liquid. Depending on the refractive index, and possible interface effects, the beam will be incident on a specific location on the sensor 15, and will generate a signal there. If the liquid is homogeneous and unchanging, this location will not change. If a different liquid flows in, with an interface or interface area with the first liquid, refraction and/or diffusion will then occur at the interface or interface area, and the position on the sensor 15 will change. A change of this type may be an indication of a liquid changeover. Only an x-dependence is indicated in the figure. Obviously, a dependence perpendicular thereto will equally be detectable. The liquid changeover dependence of the position will be great if the beam 11-5 passes (very) obliquely through the liquid. Nevertheless, a (more or less) straight passage through the liquid is also an option, which is then extraordinarily sensitive to effects, in particular diffusion, at the interface, but on the whole not to changes in the refractive index. A change in the surface of a light beam detected on the sensor 15 is an indication of a refractive index or change therein.

Here, the cell is made from a transparent material, such as a plastic or glass. This also serves as an insulator between two electrodes, designed here as tailpieces 40, of the conductivity or impedance meter 14. The tailpieces, which may, for example, be moulded on, are obviously also used to attach a delivery line 41 and a removal line 42 to the cell, if required using means such as hose clamps (not shown here).

The thermometer 17 shown serves to measure the temperature of the liquid and, just as all other sensors shown, is connected to the sensor control. If the thermometer measures an absolute temperature which is too high or low, which may, for example, present a physical danger to an animal, the sensor control can generate an alarm signal, using a signal generator not shown here, such as an SMS message, an e-mail message, or an audible and/or visible signal. According to the invention, an important possibility is that the thermometer detects a temporary peak in the temperature. This nearly always indicates a reaction between two liquids at an interface between them. A very reliable liquid changeover indication can similarly be determined on the basis thereof, again, if required, with an alarm signalling. It must be noted that a certain step in the temperature per se does not necessarily indicate that an incorrect liquid is added. In any event, for example, new supply can be provided from a cold-storage container. However, if a peak occurs, wherein the temperature is higher than both the first and the second liquid temperatures, there must be a cause thereof, which often, if not always, lies in a reaction between the liquids.

The light beam 11-5 is injected substantially obliquely into the through-flow cell, since a change in the refractive index in the liquid present, or even absence of liquid, may, already during injection, then cause a change of direction, and therefore a substantial position change and/or surface change on the optical sensor 15.

Figure 5 shows a diagram with a possible measuring signal T as a function of time. The measuring signal relates, for example, to turbidity, which can be determined from a transmission measurement, or temperature measurement. The measuring signal reveals a peak 16 during a time Δt, and a noise ripple 18 of size ΔT. The value of the signal falls from a stable value T_{f1} to a stable value T_{f2}. However, a peak 16 to a value Tₚ is located between them.

In practice, the value of T will not be perfectly stable, but will always contain some noise ripples 18. However, statistical analysis will in most cases be able to make a clear distinction between noise ripples 18 and a "real", causal peak 16, in fact on the basis of the size of the signal change. In this case, the rise (Tp - T_{f1}) and, since it is even greater, certainly the fall (Tp - T_{f2}), appear to be greater than a rise threshold value and a fall threshold value respectively, which in this case lies at 2ΔT. This does not apply to the noise ripple 18. No alarm therefore needs to be given for the noise ripple, but an alarm does need to be given for the peak 16. It must be noted that it is not necessary for both the rise and fall to end up above a threshold. If, for example, there is a substantial temperature difference between two liquids, it could be that the temperature rise as a result of a reaction is masked by the temperature step in combination with pure heat transport and mixing. If an increase nevertheless occurs between the two stable levels, a reaction will almost certainly have taken place here also, and not only the temperature, but also the composition of the liquid has changed, which may be a reason for an alarm.

Another important criterion is the time period during which a peak occurs. If this is a very broad, i.e. prolonged, peak, it may also be a random overall temperature variation, for example under the influence of solar irradiation. For this reason, the time period Δt is also preferably examined. If this is less than a specific value to be determined in practice, a liquid changeover is inferred, and otherwise not. The time period may be dependent on the measured liquid flow rate, but also, for example, on the distance to the liquid delivery, such as the supply or main line or the like. In any event, if the distance is great, more mixing may already occur, and a peak will already be more spread out.

Figure 6 shows a diagram with a different possible measuring signal as a function of time. It relates here to an example of the x position of the beam 11-5 according to Figure 4. It can be seen that this position is first stable around X₀, then varies substantially, and becomes stable once more around X₀. This is an indication of a turbulent interface which severely disturbs the position of the light beam on the sensor 15, whereas the liquids themselves have substantially the same refractive index. It must be noted that this then involves an interface area with a reaction product which will itself have a differing refractive index. Alternatively, the beam passes perpendicularly through the liquid, and refraction/reflection takes place at a turbulent interface, particularly if no mixing occurs.

The illustration is merely an example of the application of the sensor device according to the invention. Equivalent modifications will be simple to find for the person skilled in the art. The scope of protection is determined by the attached claims.

## Claims

1. Dairy animal treatment assembly, comprising
- a dairy animal standing area,
- a teat treatment device (20) configured to apply liquid (32) to a teat (22) of a dairy animal (21) at the dairy animal standing area
- a control device to control the teat treatment device (20),
wherein the teat treatment device (20) comprises at least one liquid line (27) with an opening for applying the liquid (32) to the teat (22), and also a sensor system (1) with:
- a through-flow cell (2) with a liquid delivery opening (3) and a liquid removal opening (4), said through-flow cell being configured to allow the through-flow of the liquid (5-1, 5-2),
- a detector device (6) which is configured to measure a characteristic of the liquid in the cell and to generate an associated detector signal, and
- a sensor control (7) which is configured to analyse the detector signal,
wherein the sensor control (7) is configured to detect a liquid changeover (8) in the through-flow cell if a change per time unit in the detector signal and/or a change in the detector signal is greater than a predefined change threshold value or than a predefined threshold value, respectively,
wherein the dairy animal treatment assembly furthermore comprises a storage container for the liquid and a buffer device, wherein the buffer device is directly connected to the liquid line, and wherein the storage container and the buffer device are directly interconnected by means of a buffer delivery line,
wherein the buffer delivery line comprises the through-flow cell.

2. Assembly according to Claim 1, wherein the sensor system comprises an impedance meter which is configured to measure the impedance value of the liquid in the through-flow cell and at least one optical detector to measure and determine a value of an optical colour characteristic of the liquid in the through-flow cell, wherein the colour characteristic is an indication of the extent to which a colour characteristic of the measured liquid differs from an optically perfectly clear liquid, in particular water.

3. Assembly according to Claim 2, wherein the sensor device is configured to give an empty alarm, indicating that the buffer container delivery line is empty, if the measured impedance value lies above an impedance threshold and the measured value of the colour characteristic lies below a predefined colourfullness threshold.

4. Assembly according to Claim 2 or 3, wherein the optical detector is configured to emit light and transmit it through the through-flow cell, and is also configured to pick up and measure an intensity for at least two wavelengths of light which has passed along one or more optical paths through the through-flow cell.

5. Assembly according to one of Claims 2-4, wherein the colour characteristic is dependent on a ratio, for a respective optical path, of, on the one hand, the intensity of the light picked up at one wavelength, and, on the other hand, either the intensity of the light picked up at a different wavelength, or a total measured light intensity.

6. Assembly according to one of Claims 2-5, wherein the optical detector comprises at least one source of white light and at least one RGB sensor which produces three signals (R, G and B), with at least one optical path between each of the sources and RGB sensors, and wherein the colour characteristic equals or is based on the standard deviation of the three intensity ratios of the three signals in relation to the average of the three intensity ratios, in particular the sum of this standard deviation for a plurality of the optical paths.

7. Assembly according to Claim 6, wherein the optical detector comprises at least two sources of white light and/or at least two RGB sensors, in such a way that there is at least one direct optical path, wherein the light emitted by a source is linearly incident on an RGB sensor, and at least one indirect optical path, wherein the light from a source is incident on an RGB sensor at least substantially via diffusion and/or reflection, and wherein the colour characteristic comprises the aforementioned sum for at least the direct optical path and the indirect optical path.

8. Assembly according to Claim 3 or according to one of Claims 2 or 4-7 in dependence on 3, wherein the sensor device is configured to detect a liquid changeover between two different liquids in the through-flow cell if a change per time unit in the detector signal and/or change in the detector signal is greater than a predefined change threshold value or than a predefined threshold value, respectively, and wherein the sensor control is configured to generate a different-liquid alarm signal if the sensor control detects a liquid changeover in the through-flow cell but no empty alarm is in force for the through-flow cell.

## Patentansprüche

1. Milchtierbehandlungseinrichtung, die umfasst
- einen Milchtierstehbereich,
- eine Zitzenbehandlungsvorrichtung (20), die so ausgelegt ist, dass sie eine Flüssigkeit (32) auf eine Zitze (22) eines Milchtiers (21) in dem Milchtierstehbereich aufbringt,
- eine Steuervorrichtung zum Steuern der Zitzenbehandlungsvorrichtung (20),
wobei die Zitzenbehandlungsvorrichtung (20) mindestens eine Flüssigkeitsleitung (27) mit einer Öffnung zum Aufbringen der Flüssigkeit (32) auf die Zitze (22) und ferner ein Sensorsystem (1) umfasst mit:
- einer Durchflusszelle (2) mit einer Flüssigkeitszuführöffnung (3) und einer Flüssigkeitsabführöffnung (4), wobei die Durchflusszelle so ausgelegt ist, dass sie das Durchfließen der Flüssigkeit (5-1, 5-2) ermöglicht,
- einer Detektorvorrichtung (6), die so ausgelegt ist, dass sie eine Charakteristik der Flüssigkeit in der Zelle misst und ein dazugehöriges Detektorsignal erzeugt, und
- einer Sensorsteuerung (7), die so ausgelegt ist, dass sie das Detektorsignal analysiert,
wobei die Sensorsteuerung (7) so ausgelegt ist, dass sie einen Flüssigkeitswechsel (8) in der Durchflusszelle detektiert, falls eine Veränderung pro Zeiteinheit des Detektorsignals und/oder eine Veränderung des Detektorsignals größer ist als ein vordefinierter Veränderungsschwellwert bzw. als ein vordefinierter Schwellwert,
wobei die Milchtierbehandlungseinrichtung ferner einen Vorratsbehälter für die Flüssigkeit und eine Puffervorrichtung umfasst, wobei die Puffervorrichtung direkt mit der Flüssigkeitsleitung verbunden ist und wobei der Vorratsbehälter und die Puffervorrichtung mittels einer Pufferzuführleitung direkt miteinander verbunden sind,
wobei die Pufferzuführleitung die Durchflusszelle umfasst.

2. Einrichtung nach Anspruch 1, wobei das Sensorsystem einen Impedanzmesser, der so ausgelegt ist, dass er den Impedanzwert der Flüssigkeit in der Durchflusszelle misst, und mindestens einen optischen Detektor zum Messen und Bestimmen eines Werts einer optischen Farbcharakteristik der Flüssigkeit in der Durchflusszelle umfasst, wobei die Farbcharakteristik ein Anzeichen für das Maß ist, in dem sich eine Farbcharakteristik der gemessenen Flüssigkeit von einer optisch vollkommen klaren Flüssigkeit, insbesondere Wasser, unterscheidet.

3. Einrichtung nach Anspruch 2, wobei die Sensorvorrichtung so ausgelegt ist, dass sie einen Leer-Alarm ausgibt, der anzeigt, dass die Pufferbehälter-Zuführleitung leer ist, falls der gemessene Impedanzwert über einem Impedanzschwellwert liegt und der Messwert der Farbcharakteristik unter einem vordefinierten Farbigkeitsschwellwert liegt.

4. Einrichtung nach Anspruch 2 oder 3, wobei der optische Detektor so ausgelegt ist, dass er Licht emittiert und dieses durch die Durchflusszelle sendet, und ferner so ausgelegt ist, dass er eine Stärke für mindestens zwei Wellenlängen des Lichts aufnimmt und misst, das einen oder mehrere optische Wege entlang durch die Durchflusszelle gelaufen ist.

5. Einrichtung nach einem der Ansprüche 2-4, wobei die Farbcharakteristik von einem Verhältnis, für einen jeweiligen optischen Weg, einerseits der Stärke des Lichts, das bei einer Wellenlänge aufgenommen wird, und andererseits entweder der Stärke des Lichts, das bei einer anderen Wellenlänge aufgenommen wird oder einer gesamten gemessenen Lichtstärke abhängig ist.

6. Einrichtung nach einem der Ansprüche 2-5, wobei der optische Detektor mindestens eine Quelle für weißes Licht und mindestens einen RGB-Sensor, der drei Signale (R, G und B) produziert, mit mindestens einem optischen Weg zwischen jeder der Quellen und der RGB-Sensoren umfasst, und wobei die Farbcharakteristik der Standardabweichung der drei Stärkenverhältnisse der drei Signale in Bezug auf das Mittel der drei Stärkenverhältnisse, insbesondere der Summe dieser Standardabweichungen für eine Vielzahl der optischen Wege, gleich ist oder auf dieser basiert.

7. Einrichtung nach Anspruch 6, wobei der optische Detektor mindestens zwei Quellen für weißes Licht und/oder mindestens zwei RGB-Sensoren derart umfasst, dass es mindestens einen direkten optischen Weg gibt, wobei das Licht, das von einer Quelle emittiert wird, linear auf einen RGB-Sensor auftrifft, und mindestens einen indirekten optischen Weg gibt, wobei das Licht aus einer Quelle im Wesentlichen über Diffusion und/oder Reflexion auf einen RGB-Sensor auftrifft, und wobei die Farbcharakteristik die vorgenannte Summe zumindest für den direkten optischen Weg und den indirekten optischen Weg umfasst.

8. Einrichtung nach Anspruch 3 oder nach einem der Ansprüche 2 oder 4-7 mit Rückbezug auf 3, wobei die Sensorvorrichtung so ausgelegt ist, dass sie einen Flüssigkeitswechsel zwischen zwei unterschiedlichen Flüssigkeiten in der Durchflusszelle detektiert, falls eine Veränderung pro Zeiteinheit des Detektorsignals und/oder eine Veränderung des Detektorsignals größer ist als ein vordefinierter Veränderungsschwellwert bzw. als ein vordefinierter Schwellwert, und wobei die Sensorsteuerung so ausgelegt ist, dass sie ein Andere-Flüssigkeit-Alarmsignal erzeugt, falls die Sensorsteuerung einen Flüssigkeitswechsel in der Durchflusszelle detektiert, jedoch kein Leer-Alarm für die Durchflusszelle wirksam ist.

## Revendications

1. Ensemble de traitement d'animaux laitiers, comportant
- une zone de station d'animaux laitiers,
- un dispositif (20) de traitement de trayon configuré pour appliquer du liquide (32) à un trayon (22) d'un animal laitier (21) dans la zone de station d'animaux laitiers,
- un dispositif de commande pour commander le dispositif (20) de traitement de trayon,
le dispositif (20) de traitement de trayon comportant au moins une canalisation (27) de liquide dotée d'une ouverture servant à appliquer le liquide (32) au trayon (22), et également un système (1) à capteur comprenant :
- une cellule (2) à écoulement traversant dotée d'une ouverture (3) d'amenée de liquide et d'une ouverture (4) d'évacuation de liquide, ladite cellule à écoulement traversant étant configurée pour permettre l'écoulement traversant du liquide (5-1, 5-2),
- un dispositif détecteur (6) qui est configuré pour mesurer une caractéristique du liquide dans la cellule et pour générer un signal de détecteur associé, et
- une commande (7) à capteur qui est configurée pour analyser le signal de détecteur,
la commande (7) à capteur étant configurée pour détecter un changement (8) de liquide dans la cellule à écoulement traversant si une variation par unité de temps du signal de détecteur et/ou une variation du signal de détecteur est supérieure à une valeur seuil prédéfinie de variation ou à une valeur seuil prédéfinie, respectivement,
l'ensemble de traitement d'animaux laitiers comportant en outre un récipient de stockage pour le liquide et un dispositif tampon, le dispositif tampon étant directement relié à la canalisation de liquide, et le récipient de stockage et le dispositif tampon étant directement interconnectés au moyen d'une canalisation d'amenée du tampon,
la canalisation d'amenée du tampon comportant la cellule à écoulement traversant.

2. Ensemble selon la revendication 1, le système à capteur comportant un impédancemètre qui est configuré pour mesurer la valeur d'impédance du liquide dans la cellule à écoulement traversant et au moins un détecteur optique servant à mesurer et à déterminer une valeur d'une caractéristique optique de couleur du liquide dans la cellule à écoulement traversant, la caractéristique de couleur étant un indication du degré auquel une caractéristique de couleur du liquide mesuré diffère d'un liquide parfaitement clair optiquement, en particulier de l'eau.

3. Ensemble selon la revendication 2, le dispositif de capteur étant configuré pour donner une alarme de vide, indiquant que la canalisation d'amenée du récipient tampon est vide, si la valeur d'impédance mesurée se situe au-dessus d'un seuil d'impédance et si la valeur mesurée de la caractéristique de couleur se situe au-dessous d'un seuil de coloration prédéfini.

4. Ensemble selon la revendication 2 ou 3, le détecteur optique étant configuré pour émettre une lumière et la transmettre à travers la cellule à écoulement traversant, et étant également configuré pour capter et mesurer une intensité d'au moins deux longueurs d'ondes d'une lumière qui a parcouru un ou plusieurs chemins optiques à travers la cellule à écoulement traversant.

5. Ensemble selon l'une des revendications 2 à 4, la caractéristique de couleur étant dépendante d'un rapport, pour un chemin optique respectif, entre, d'une part, l'intensité de la lumière captée à une longueur d'onde, et, d'autre part, soit l'intensité de la lumière captée à une longueur d'onde différente, soit une intensité lumineuse totale mesurée.

6. Ensemble selon l'une des revendications 2 à 5, le détecteur optique comportant au moins une source de lumière blanche et au moins un capteur RGB qui produit trois signaux (R, G et B), avec au moins un chemin optique entre chacune des sources et les capteurs RGB, et la caractéristique de couleur étant égale à ou basée sur l'écart-type des trois rapports d'intensité des trois signaux par rapport à la moyenne des trois rapports d'intensité, en particulier la somme de cet écart-type pour une pluralité des chemins optiques.

7. Ensemble selon la revendication 6, le détecteur optique comportant au moins deux sources de lumière blanche et/ou au moins deux capteurs RGB, de telle manière qu'il existe au moins un chemin optique direct, où la lumière émise par une source est incidente linéairement sur un capteur RGB, et au moins un chemin optique indirect, où la lumière provenant d'une source est incidente sur un capteur RGB au moins sensiblement par diffusion et/ou réflexion, et la caractéristique de couleur comportant la somme susmentionnée pour au moins le chemin optique direct et le chemin optique indirect.

8. Ensemble selon la revendication 3 ou selon l'une des revendications 2 ou 4 à 7 lorsqu'elles sont dépendantes de 3, le dispositif de capteur étant configuré pour détecter un changement de liquide entre deux liquides différents dans la cellule à écoulement traversant si une variation par unité de temps du signal de détecteur et/ou une variation du signal de détecteur est supérieure à une valeur seuil prédéfinie de variation ou à une valeur seuil prédéfinie, respectivement, et la commande à capteur étant configurée pour générer un signal d'alarme de liquides différents si la commande à capteur détecte un changement de liquide dans la cellule à écoulement traversant mais qu'aucune alarme de vide n'est en vigueur pour la cellule à écoulement traversant.
